# EUROPEAN PATENT SPECIFICATION

(11) **EP 4 183 646 B1**
(45) Date of publication and mention of the grant of the patent: **04.09.2024**
(21) Application number: 21306596.4
(22) Date of filing: 17.11.2021
(51) Int. Cl.: B60T 17/00, B60T 17/22

(54) **AIR SUPPLY MANAGEMENT SYSTEM AND METHOD FOR AN EQUIPMENT COMPRISING A PNEUMATIC SYSTEM, AND RELATED PNEUMATIC SYSTEM AND EQUIPMENT, IN PARTICULAR A TRANSPORTATION VEHICLE**
LUFTVERSORGUNGVERWALTUNGSSYSTEM UND -VERFAHREN FÜR EINE AUSRÜSTUNG MIT EINEM PNEUMATISCHEN SYSTEM UND ZUGEHÖRIGES PNEUMATISCHES SYSTEM UND AUSRÜSTUNG, INSBESONDERE EIN TRANSPORTFAHRZEUG
SYSTÈME ET PROCÉDÉ DE GESTION D'ALIMENTATION D'AIR POUR UN ÉQUIPEMENT COMPRENANT UN SYSTÈME PNEUMATIQUE ET SYSTÈME PNEUMATIQUE ET ÉQUIPEMENT ASSOCIÉS, EN PARTICULIER UN VÉHICULE DE TRANSPORT

(43) Date of publication of application: 24.05.2023
(73) Proprietor: ALSTOM Holdings, 93400 Saint-Ouen-sur-Seine (FR)
(72) Inventor: EMORINE, Denis, 17440 AYTRE (FR)
(74) Representative: Lavoix

(56) References cited:
- EP-A1- 3 552 894
- US-A1- 2013 008 245
- US-A1- 2020 139 950
- US-B1- 6 401 015

## Description

The present invention relates in general to the field of air supply systems for pneumatic systems.

More in particular, the present invention relates to an air supply management system and a method for an equipment whose pneumatic system, or at least a part thereof, has to undergo a check test before putting the equipment into operations.

Further, the present invention relates also to a pneumatic system comprising such an air supply management system, and to an equipment, in particular a transportation vehicle, notably a railway vehicle or a truck, comprising such an air supply management system or such pneumatic system, as it is important to have a reduced preparation time for these vehicle.

The air supply management system and method according to the present invention are particularly suitable for being applied to all kind of air supply system and particularly those for transportation vehicles, and especially to railway vehicles, such as trains, having a pneumatic system whose pressurized air brake system has to be prepared ready before to be allowed to be tested before putting the vehicle into operations; therefore, they will be described hereinafter by making specific reference to such application without intending in any way to limit their possible use with other types of equipment, and/or for carrying out checking tests other than a test of air brake systems.

The use of pneumatic systems using pressurized air as an energy source for carrying out various functionalities of an equipment is widespread in a countless number of technical fields.

For example, a pneumatic system of a train includes several sub-systems which require pressurized air as energy source, e.g. the brake system, the suspension system, et cetera.

Usually, the complete filling of the pneumatic system with pressurized air requires a rather long time.

For example, a train can be parked with air unavailable or insufficient inside its pneumatic system; as a consequence, at the following start up, there is the need to refill completely or partially the pneumatic system with pressurized air before mandatory testing and putting the train into operations.

To this end, a compressor fills the whole pneumatic system by supplying pressurized air into all its pneumatic parts or subsystems at the same time.

Then, once the pressure of the pneumatic system reaches a predetermined threshold, a brake test on the braking system is carried out in order to verify if such vital part of the train is working properly.

Once this test is positively completed, then the train can be put into operations for starting its due service.

Unfortunately, although this way of operating allows to properly prepare a train and to carry out any needed test before putting the train into operations, it is a quite long process and negatively affects the operating costs.

Indeed, personnel should be present and wait on-board until the pneumatic system is completely filled in and thereafter the brake test is positively carried out.

US 6,401,015 B1 discloses a train control system that includes a plurality of control subsystems for installation in respective locomotives. At least one of the control subsystems is configurable as a lead control subsystem, and at least one other control subsystem is configurable as a remote control subsystem. Each control subsystem comprises a radio transceiver, a first processor connected to the radio transceiver for communicating with at least one other control subsystem, an electronic brake valve connected to the first processor, and an electropneumatic controller connected to the first processor and the electronic brake valve, for interfacing to the air brake system of the train. The first processor comprises a locomotive computer interface for performing both distributed power and electronic air brake functions in cooperation with the locomotive control computer. The distributed power functions comprise tractive effort and dynamic braking functions. The electronic air brake functions comprise at least one of automatic service braking, independent braking, and emergency braking.

In view of the above, the aim of the present invention is to mitigate at least partially such issue, and in particular to provide a solution which allows to effectively reduce the total time needed to fill in the pneumatic system of an equipment and to carry out a checking test on at least part of such pneumatic system before putting the equipment into operations.

Thus, the present invention provides an air supply management system for an equipment comprising a pneumatic system at least one part or subsystem of which has to undergo a checking test before putting the equipment into operations, the air management system being characterized in that it comprises at least:
- a controller;
- a compressor configured to supply the pneumatic system with pressurized air;
- at least one set of airflow control means which are connected to the pneumatic system and are configured to commute between a first state where they impede pressurized air to flow into at least one selected subsystem or part of the pneumatic system while one or more remaining subsystems or parts of the pneumatic system are filled with pressurized air, and a second state where flow of pressurized air into said at least one selected subsystem or part is allowed;
wherein the controller is configured to start a checking test of at least one of said one or more remaining subsystems or parts filled with pressurized air when the internal pressure of the pneumatic system reaches a predetermined threshold, and to commute or cause said at least one set of airflow control means to commute from said first position into said second position allowing pressurized air to flow into the at least one selected subsystem or part while carrying out in parallel said checking test.

The present invention also provides a method for managing air supply for an equipment comprising a pneumatic system at least one part or subsystem of which has to undergo a checking test before putting the equipment into operations, the method being characterized in that it comprises at least the following phases:
- (a): providing the pneumatic system with at least one set of airflow control means configured to commute between a first state where they temporarily impede pressurized air to flow into at least one selected subsystem or part of the pneumatic system and a second state where flow of pressurized air into said at least one selected subsystem or part is allowed;
- (b): supplying one or more remaining subsystems or parts of the pneumatic system with pressurized air, while maintaining said at least one set of airflow control means in said first state to temporarily impede pressurized air to flow into said at least one selected subsystem or part of the pneumatic system;

- (c): starting a checking test of at least one of said one or more remaining subsystems or parts filled with pressurized air when the internal pressure of the pneumatic system reaches a predetermined first pressure threshold,
- (d): commuting or cause said at least one set of airflow control means to commute from said first position into said second position allowing pressurized air to flow into said at least one selected subsystem or part while carrying out in parallel said checking test.

Further, the present invention encompasses also a pneumatic system for an equipment, characterized in that it comprises an air supply management system as above indicated, and in particular as described in the following description and detailed in the appended relevant claims.

Moreover, the present invention provides also an equipment characterized in that it comprises an air supply management system or a pneumatic system as above indicated, and in particular as described in the following description and particularly detailed in the appended relevant claims.

Finally, the present invention provides also a transportation vehicle, notably a railway vehicle, characterized in that it comprises an air supply management system or a pneumatic system as above indicated, and in particular as described in the following description and particularly detailed in the appended relevant claims.

Detailed characteristics and advantages will become apparent from the description of some preferred but not exclusive exemplary embodiments of an air supply management system and a method for managing air supply, as well as related pneumatic system and equipment, according to the present invention, illustrated only by way of non-limitative examples with the accompanying drawings, wherein:
figure 1 is a block diagram schematically illustrating a possible embodiment or an air supply management system for an equipment, in particular a train comprising a pneumatic system, according to the present invention;
figure 2 shows schematically a possible embodiment of air flow control means coupled to a controller and used in the air supply management system of figure 1, according to the present invention;
figure 3 is a flow diagram schematically illustrating a method for managing air supply for an equipment comprising a pneumatic system, according to the present invention;
figure 4 illustrates an exemplary diagram comparing the time needed for filling a pneumatic system and starting a checking test of the brake system of a train using the system and method according to the invention with a known procedure.

It should be noted that in the detailed description that follows, identical or similar components, either from a structural and/or functional point of view, may have the same reference numerals, regardless of whether they are shown in different embodiments of the present invention.

It should be also noted that in order to clearly and concisely describe the present invention, the drawings may not necessarily be to scale and certain features of the invention may be shown in somewhat schematic form.

Further, when the term "adapted" or "arranged" or "configured" or "shaped", or "set up" is used herein while referring to any component as a whole, or to any part of a component, or to a combination of components, it has to be understood that it means and encompasses correspondingly either the structure, and/or configuration and/or form and/or positioning. In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

In addition, when the term "substantial" or "substantially" is used herein, it has to be understood as encompassing an actual variation of plus or minus 5% with respect to an indicated reference value, device or part thereof, time or position.

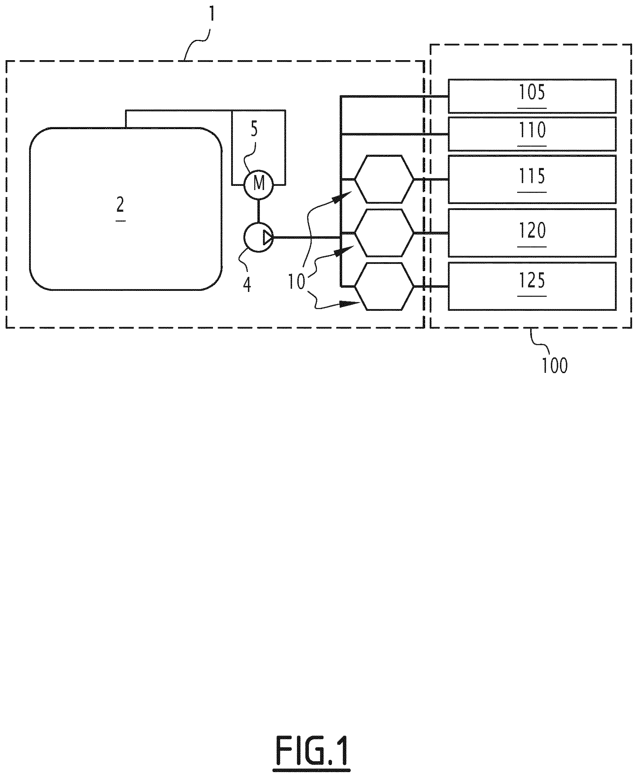

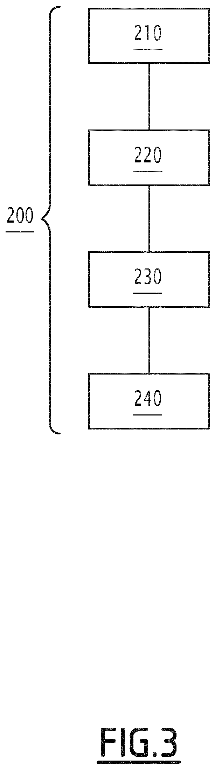

Figures 1 and 3 illustrate an air supply management system and a method for managing air supply for an equipment comprising a pneumatic system, therein indicated by the overall reference numbers 1 and 200, respectively.

In particular, in figure 1 there is also schematically represented a pneumatic system therein indicated by the overall reference number 100.

As those skilled in the art would easily appreciate, the pneumatic system 100 can comprise or be composed by several parts or subsystems operatively associated to each other.

Each subsystem or part comprises any suitable number of components, such as pipes or conduits devised to be filled in with pressurized air in order for the subsystem or part to perform the functionalities for which it has been designed for.

In the embodiment of figure 1, the illustrated pneumatic system 100 is for example the whole pneumatic system of a railway vehicle, in particular of a train, and comprises for instance a main pipe system 105 aimed at distributing pressurized air inside the whole train, a brake system 110 which is suitable to be filled with pressurized air for performing braking functionalities, a suspension system 115 which is suitable to be filled with pressurized air for performing suspension functionalities; further, in figure 1 there is depicted an air reservoir subsystem 120 aimed at storing pressurized air for whatever need and use thereof during the operations of the train, an another optional subsystem 125.

As illustrated in figure 1, the air management system 1 according to the present invention comprises:
- a controller 2;
- a compressor 4, which actuated by an associated motor 5 and is configured, under the control of the controller 2, to supply the pneumatic system 100 with pressurized air; and
- at least one set of airflow control means, indicated in figure 1 by the cumulative reference number 10, which are operatively associated, e.g. connected to the pneumatic system 100, and are configured to commute between a first state where they impede pressurized air to flow into at least one selected subsystem or part of the pneumatic system 100 while one or more remaining subsystems or parts of the pneumatic system 100 are filled with pressurized air, and a second state where flow of pressurized air is allowed also into the at least one selected subsystem or part.

According to the architecture of the pneumatic system 100, the different volumes or capacities of 105, 110, 115, 120, 125, it is also possible to commute between the first and the second states, in order for instance to remain in an acceptable range of pressure in the pneumatic system to allow performing preparation test or first usage. This is managed by the controller 2 that is able to monitor the pressure of the pneumatic system 100 thanks to the control means 10 usefully embedding a dedicated sensor for it.

Conveniently, in the system 1 according to the invention, the controller 2 is configured to start a checking test of at least one of the one or more remaining subsystems or parts filled with pressurized air when the internal pressure of the pneumatic system reaches a predetermined first pressure threshold, and to commute or cause to commute the at least one set of airflow control means 10 from the above indicated first state into the second state, thus allowing pressurized air to flow also into the at least one selected subsystem or part, while carrying out in parallel the checking test.

In practice, in the system 1 at least one set of airflow control means 10 is located at a selected position within the pneumatic system 100 and allows partitioning the whole pneumatic system 100 into parts or subsystems having a higher priority and thus precedence over other lower priority parts or subsystem, in terms of timing for supplying therein pressurized air.

Hence, thanks to the presence of a set of airflow control means 10, a selected part or subsystem of the pneumatic system 100 is temporarily isolated impeding the flow of pressurized air into it, while at the same time one or more remaining subsystems or parts of the pneumatic system 100, including the part or subsystem to be tested or used, are filled by the compressor 4 with pressurized air to bring the level of pressure inside such one or more remaining parts or subsystems at a predefined first threshold in the shortest time possible.

Then, when the first pressure threshold is achieved, the controller 2 starts the checking test on at least one part or subsystem and, while the test is under execution, the at least one set of control means 10 is commuted into the second state or position, thus allowing flows of pressurized air also into the previously isolated part or subsystem. If necessary, the commutation of the control means 10 can be done either very rapidly or progressively in order to have a smooth transition at the pneumatical system level.

In this way, while carrying out the checking test in parallel with completion of filling up other parts of the pneumatic system, time for getting the equipment, and in particular a train, ready for operations is optimized.

The actual pressure of the pneumatic system 100 or any part or subsystem thereof can be measured for instance via one or more pressure sensors (not illustrated) which are located at suitable positions within the system 100 itself and which provide the controller 2 with corresponding signals indicative of the actual pressure detected. Further, the control means 10 contain also a pressure sensor in order to monitor the status of filling and if necessary to diagnostic a failure.

The controller 2 can comprise or be constituted by any processor-based device, e.g. a microprocessor, microcontroller, a microcomputer, a programmable logic controller, an application specific integrated circuit, or any other programmable circuit, commercially available and provided with suitable circuitry to the extent necessary to perform the functionalities provided within the frame of the present invention.

The operating way above described is particularly advantageous when the equipment to which the system 1 is used with is a transportation vehicle, such as a train, and whose pneumatic system 100 includes an air brake system 105; accordingly, the controller 2 is adapted to carry out a checking test of the air brake system 105 before the transportation vehicle is put into operation.

From a practical point of view, such test of the brake system can be executed according to procedures well known to those skilled in the art, and therefore they will not be described in details herein.

In one possible embodiment, as illustrated in figure 1, the system 1 comprises a plurality of sets of airflow control means 10, namely two or more sets, each set of airflow control means 10 being associated to a corresponding subsystem or part of the pneumatic system 100,

For instance, in the exemplary embodiment illustrated in figure 1, there are used three sets of airflow control means 10, out of which a first set is associated to the suspension subsystem 115, the second set is associated to the air reservoir subsystem 120, and the third set is associated to the optional subsystem 125.

According to a first possible mode, the controller 2 is configured to commute the sets of airflow control means 10 from the respective first position to the respective second position in a predefined sequence among them.

In practice, after the pressure inside the main pipe system 105 and brake subsystem 110 as reached the first pressure threshold, and the checking test is under execution, the controller 2 first commutes or causes to commute the first set of airflow control means associated to the suspension subsystem 115 from the first state into the second state; thereafter, the controller 2 commutes or causes to commute the second set of airflow control means 10 associated to the air reservoir subsystem 120 from the respective first state into the respective second state; finally, the controller 2 commutes or causes the third set of airflow control means 10 associated to the subsystem 125 to commute from the respective first state into the respective second state.

According to a second possible mode, the controller 2 is configured to commute at least two sets of airflow control means 10, or even all sets used, from the respective first state to the respective second state in parallel, e.g. substantially at the same time, to each other.

In both modes, the time when the controller 2 commutes or causes to commute the or each set of airflow control means 10 used can be properly selected and suitably programmed.

For example, if only one set of airflow control means 10 is used, then the commutation from the fist state to the second state can be started substantially simultaneously with the starting of the checking test.

Alternatively, the commutation from the first position to the second position can be carried out, while the checking test is under execution, when the pressure inside the pneumatic system 100 reaches a second pressure threshold, which can be different, for example a certain amount higher than the previously mentioned pressure threshold at which the checking test is started.

Likewise, if two or more sets of airflow control means are used and they are commuted in parallel to each other, then all such sets can be commuted or caused to commute from the first state simultaneously with the starting of the checking test or, while the checking test is under execution, when the pressure inside the pneumatic system 100 including the various subsystems already filled with pressurized air, reaches the mentioned second pressure threshold.

If instead two or more sets are used and they are commuted in sequence one after the other, the second set can be triggered for example when, after starting to fill in with pressurized air the first previously isolated subsystem, the pressure level inside the whole pneumatic system 100 reaches a second pressure threshold; the second pressure threshold can be different, for example a certain amount higher than the previously mentioned first pressure threshold at which the checking test is started.

The same applies if there are further sets of air flow control means, where each subsequent set can be commuted or caused to commute when the pressure level inside the whole pneumatic system 100, including the subsystems or parts already supplied with pressurized air, reaches again the second pressure threshold, or any other suitable value.

Usefully, in the system 1 according to the invention, the or each set of airflow control means 10 comprises a few and quite standard components.

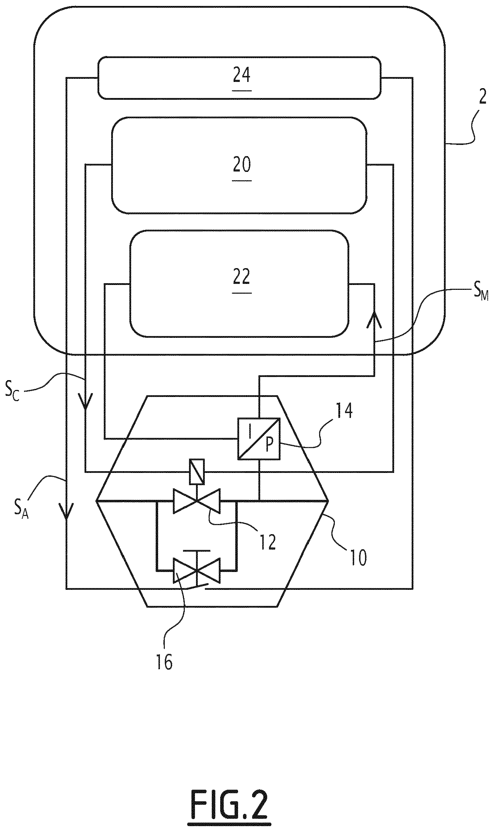

In one embodiment, as schematically illustrated in figure 2, the or each set of airflow control means 10 comprises at least one valve 12 configured to temporary fluidly isolate the at least one selected subsystem or part 115, 120, or 125 of the pneumatic system 100 to which the corresponding set is associated with.

In particular, according to one possible mode, the at least one valve 12 comprises an electro valve which can commute or be actuated to commute from the first state (or first position) into the second state (or second position), for example by a control signal S_{c} outputted by a command module 20 of the controller 2 when the pressure inside the pneumatic system 100 reaches the predetermined first pressure threshold, or a different pressure threshold purposively selected for it, such as the above mentioned second pressure threshold.

According to a further possible mode, the at least one valve 12 comprises a minimum pressure valve.

Also in this case, the minimum pressure valve is adapted to remain in said first state until when the pressure inside the pneumatic system 100 does not reach said predetermined first pressure threshold or a different pressure threshold purposively selected for it, such as the above mentioned second pressure threshold, at which it can commute or caused to commute, for example by a control signal S_{c} outputted by the controller 2.

Usefully, the or each set of airflow control means 10 further comprises at least one sensor 14 for monitoring the correct functioning of the at least one valve 12.

Conveniently, the or each set of airflow control means 10 further comprises at least one bypass device 16 for bypassing the at least one valve 12 if the at least one sensor 14 detects a failure or malfunctioning of the monitored at least one valve 12.

Such bypass device 16 can be for example a valve, a cock or any equivalent device configured to allow the flow of pressurized air if actuated to permit so.

In practice, the sensor 14 monitors the associated valve 12 and provides corresponding monitoring signals S_{M} to the controller 2. If, by analyzing the signals received from the sensor 14, a monitoring module 22 of the controller 12 identifies that the valve 12 is not working properly for whatever reason, then the controller will alert an operator to actuate the bypass device 16, or it will actuate the bypass device 16 via an actuation signal S_{A} emitted for example by a control module 24.

The controller 2 shall then receive a feedback signal that the bypass device 16 is effective, for instance through a dedicated contact on the bypass signal.

In this way, the subsystem associated with the faulty valve 12 is fed anyhow with pressurized air supplied by the compressor 4, thus preventing that the filling of the whole pneumatic system 100 remains uncompleted and operations endlessly delayed due to such failure.

As previously mentioned, a method 200 for managing air supply for an equipment comprising a pneumatic system 100, at least one part or subsystem of which has to undergo a checking test before putting the equipment into operations, is illustrated in figure 3.

The method 200, which can be carried out in connection with the system 1 or any part thereof, comprises at least the following phases:
- 210: providing, the pneumatic system 100 with at least one set of airflow control means 10 configured to commute between a first state where pressurized air is impeded to flow into at least one selected subsystem or part of the pneumatic system 100, e.g. the subsystems 115, 120 and 125, and a second state where flow of pressurized air into said at least one selected subsystem or part 115, 120, 125 is allowed;
- 220: supplying, for example via the compressor 4, one or more remaining subsystems or parts of the pneumatic system 100, e.g. the subsystems 105, 110 with pressurized air, while maintaining the at least one set of airflow control means 10 in said first state to temporarily impede pressurized air to flow into said at least one selected subsystem or part 115, 120, or 125 of the pneumatic system 100;
- 230: starting a checking test of at least one of said one or more remaining subsystems or parts 105, 110 filled with pressurized air when the internal pressure of the pneumatic system 100 reaches a predetermined first pressure threshold;
- 240: commuting or cause to commute said at least one set of airflow control means 10 from said first state into said second state allowing pressurized air to flow also into the at least one selected subsystem or part 115, 120 or 125 while carrying out in parallel the checking test.

In particular, when the equipment is a transportation vehicle whose pneumatic system 110 comprises at least an air brake system 115, the phase 230 of starting a checking test comprises verifying the functioning of the air brake system 115.

Further, the method 200 according to the invention can carry out all functionalities described above in connection with the air supply management system 1, and which are not described hereinafter in terms of method phases, sub-phases or steps, just for the sake of conciseness.

In particular, according to the invention, steps 230 and 240 can be executed in parallel, allowing time saving for the readiness of the pneumatic system, and in particular of the vehicle of the above illustrated example.

Hence, it is evident that the air supply management system 1 and method 200 according to the present invention allow reducing substantially the time needed for filling with pressurized air a pneumatic system and conducting a check test on the pneumatic system or part thereof before putting the equipment into operations.

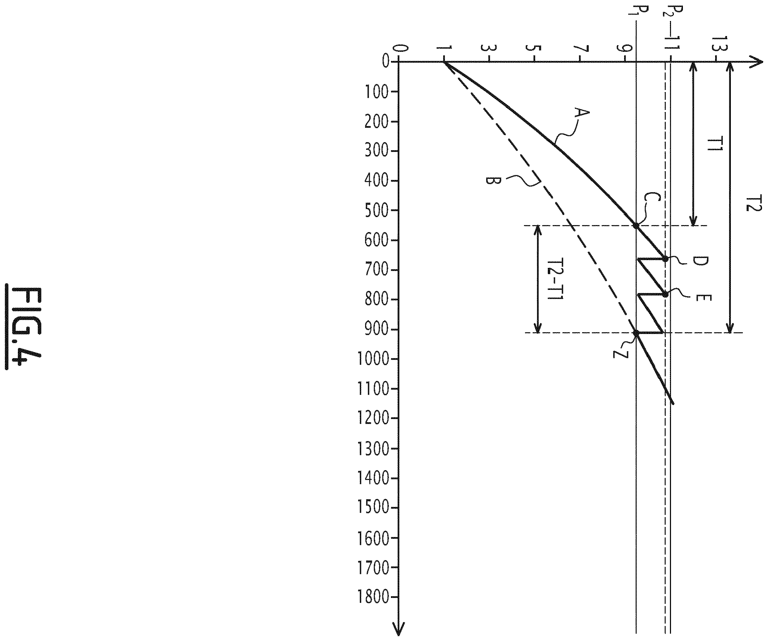

In particular, as illustrated in figure 4, by using the system 1 and method 200 according to the present invention, there is achieved a substantial reduction of time before it is possible to start a brake test for a train (point C along curve A) with respect to a traditional solution (point Z along dotted curve B) where the various parts of the pneumatic system are all and at the same time first filled, and thereafter a check test is started.

More in details, according to the invention and with reference to figure 4, the compressor 2 fills first the subsystem 105 and 110 with pressurized air. When after the interval of time T1 the pressure inside the pneumatic system 100 including the subsystem 105 and 110 reaches the predetermined first pressure threshold P₁, e.g. a relative pressure of 8,5 bars, the test of the air brake system 110 is started. Thereafter, while the test is under execution, at a certain point, for example when the pressure reaches a second threshold P₂, the first set of airflow control means 10 associated to the subsystem 110 commute or is caused to commute, and the subsystem 110 becomes to be supplied with pressurized air (point D). The same is replicated in sequence with the subsystem 115 beginning to be supplied at point E, et cetera, with the checking test under execution in parallel.

Conversely, in traditional solutions, the test is started (point Z along dotted curve B) only after the whole pressure system and related subsystems are filled at the same time with pressurized air and the pressure of the whole pneumatic system including all its subsystems reaches the first pressure threshold, i.e. after a longer time interval T2.

In this way, a reduction of time needed is achieved (T2-T1), which in the example of figure 4 is about 40%.

It is worth noting that these results are achieved by using one or more sets of rather simple and standard airflow control means, thus rendering the system 1 and method 200 according to the invention easily implementable with new or existing pneumatic systems, and/or in any suitable type of equipment having a pneumatic system which has to be filled with pressurized air and at least a part of which has to undergo a check test before putting the equipment into operations.

Hence, as previously mentioned, the present invention encompasses also:
- a pneumatic system 100 of an equipment, characterized in that it comprises an air supply management system 1 as above described, and in particular as defined in one or more of the relevant appended claims; and/or
- an equipment characterized in that it comprises an air supply management system or a pneumatic system as above described, and in particular as defined in one or more of the relevant appended claims.

In particular, the present invention encompasses a transportation vehicle, in particular a railway vehicle, notably a train, characterized in that it comprises an air supply management system 1 or a pneumatic system 100 as above described, and in particular as defined in one or more of the relevant appended claims.

The system 1 and method 200 thus conceived are susceptible of modifications and variations, all of which are within the scope of the inventive concept as defined in particular by the appended claims; for example, one or more of the sets of airflow control means can be provided with different components or with components additional to those previously described, provided that such airflow control means remain suitable for the scope and functionalities they are conceived for within the frame of the present invention. All the details may furthermore be replaced with technically equivalent elements.

## Claims

1. An air supply management system (1) for an equipment comprising a pneumatic system (100) at least one part or subsystem of which (110) has to undergo a checking test before putting the equipment into operations, the air management system (1) comprising at least:
- a controller (2);
- a compressor (4) configured to supply the pneumatic system (100) with pressurized air; **characterised by**
- at least one set of airflow control means (10) which are connected to the pneumatic system (100) and are configured to commute between a first state where they impede pressurized air to flow into at least one selected subsystem or part (105, 110, 115, 120, 125) of the pneumatic system (100) while one or more remaining subsystems or parts (105, 110, 115, 120, 125) of the pneumatic system (100) are filled with pressurized air, and a second state where flow of pressurized air into said at least one selected subsystem or part (105, 110) is allowed;
wherein the controller (2) is configured to start a checking test of at least one of said one or more remaining subsystems or parts (105, 110) filled with pressurized air when the internal pressure of the pneumatic system (100) reaches a predetermined threshold, and to commute or cause said at least one set of airflow control means (10) to commute from said first position into said second position allowing pressurized air to flow into the at least one selected subsystem or part (105, 110, 115, 120, 125) while carrying out in parallel said checking test.

2. An air supply management system (1) according to claim 1, wherein said at least one set of airflow control means (10) comprise at least one valve (12) configured to temporary fluidly isolate said at least one selected subsystem or part (115, 120, 125) of the pneumatic system (100).

3. An air supply management system (1) according to claim 2, wherein said at least one set of airflow control means (10) further comprise at least one sensor (14) for monitoring the at least one valve (12).

4. An air supply management system (1) according to claim 3, wherein said at least one set of airflow control means (10) further comprise at least one bypass device (16) for bypassing the at least one valve (12) if said at least one sensor (14) detects a failure of the monitored at least one valve (12).

5. An air supply management system (1) according to claim 2, wherein said at least one valve (12) comprises an electro valve.

6. An air supply management system (1) according to claim 2, wherein said at least one valve (12) comprises a minimum pressure valve.

7. An air supply management system (1) according to any one of the previous claims, wherein it comprises a plurality of sets of airflow control means (10), each set of airflow control means (10) being associated to a corresponding subsystem or part of the pneumatic system (100), and wherein the controller (2) is configured to commute or cause the sets of airflow control means (10) to commute from the respective first position to the respective second position in a predefined sequence among them.

8. An air supply management system (1) according to any one of claims 1 to 6, wherein it comprises a plurality of sets of airflow control means (10), each set of airflow control means (10) being associated to a corresponding subsystem or part of the pneumatic system (100), and wherein the controller (2) is configured to commute or cause to commute at least two sets of airflow control means (10) from the respective first position to the respective second position in parallel to each other.

9. An air supply management system (1) according to any one of the previous claims, wherein said equipment is a transportation vehicle comprising the pneumatic system (100), and wherein one of the subsystem or part is an air brake system (105), and wherein said controller (2) is adapted to carry out a brake test of the air brake system (105) before the transportation vehicle is put into operation.

10. A pneumatic system (100) of an equipment, **characterized in that** it comprises an air supply management system (1) according to any one of the previous claims.

11. An equipment **characterized in that** it comprises an air supply management system (1) according to any one of the claims 1 to 9, or a pneumatic system (100) according to claim 10.

12. A transportation vehicle **characterized in that** it comprises an air supply management system (1) according to any one of the claims 1 to 9, or a pneumatic system (100) according to claim 10.

13. A transportation vehicle according to claim 12, wherein the transportation vehicle is a railway vehicle.

14. A method (200) for managing air supply for an equipment comprising a pneumatic system (100) at least one part or subsystem of which has to undergo a checking test before putting the equipment into operations, the method (200) being **characterized in that** it comprises at least the following phases:
- (210): providing the pneumatic system (100) with at least one set of airflow control means (10) configured to commute between a first state where they temporarily impede pressurized air to flow into at least one selected subsystem or part (105, 110, 115, 120, 125) of the pneumatic system (100) and a second state where flow of pressurized air into said at least one selected subsystem or part (105, 110, 115, 120, 125) is allowed;
- (220): supplying one or more remaining subsystems or parts (105, 110, 115, 120, 125) of the pneumatic system (100) with pressurized air, while maintaining said at least one set of airflow control means (10) in said first state to temporarily impede pressurized air to flow into said at least one selected subsystem or part (105, 110, 115, 120, 125) of the pneumatic system (100);
- (230): starting a checking test of at least one of said one or more remaining subsystems or parts (105, 110, 115, 120, 125) filled with pressurized air when the internal pressure of the pneumatic system (100) reaches a predetermined first pressure threshold,
- (240): commuting or cause said at least one set of airflow control means (10) to commute from said first position into said second position allowing pressurized air to flow into said at least one selected subsystem or part (105, 110, 115, 120, 125) while carrying out in parallel said checking test.

15. A method (200) according to claim 14, wherein said equipment is a transportation vehicle whose pneumatic system (100) comprises at least an air brake system (110), and wherein said phase (230) of starting a checking test comprises starting a braking test to verify the functioning of said air brake system (110).

## Patentansprüche

1. Luftzufuhr-Managementsystem (1) für eine Ausrüstung, umfassend ein pneumatisches System (100), wovon mindestens ein Teil oder ein Teilsystem (110) vor Inbetriebnahme der Ausrüstung einer Kontrollprüfung unterzogen werden muss, das Luftmanagementsystem (1) mindestens umfassend:
- eine Steuerung (2);
- einen Kompressor (4), der konfiguriert ist, um dem pneumatischen System (100) Druckluft zuzuführen; **gekennzeichnet durch**
- mindestens einen Satz von Luftstrom-Steuereinrichtungen (10), die mit dem pneumatischen System (100) verbunden und konfiguriert sind, um zwischen einem ersten Zustand, in dem sie ein Einströmen von Druckluft in mindestens ein ausgewähltes Teilsystem oder Teil (105, 110, 115, 120, 125) des pneumatischen Systems (100) verhindern, während ein oder mehrere verbleibende Teilsysteme oder Teile (105, 110, 115, 120, 125) des pneumatischen Systems (100) mit Druckluft gefüllt sind, und einem zweiten Zustand, in dem eine Strömung von Druckluft in das mindestens eine ausgewählte Teilsystem oder Teil (105, 110) zugelassen ist, umzuschalten;
wobei die Steuerung (2) konfiguriert ist, um eine Kontrollprüfung von mindestens einem von dem einen oder den mehreren restlichen Teilsystemen oder Teilen (105, 110), die mit Druckluft gefüllt sind, zu beginnen, wenn der Innendruck des pneumatischen Systems (100) einen vorbestimmten Schwellenwert erreicht, und um den mindestens einen Satz von Luftstrom-Steuereinrichtungen (10) von der ersten Position in die zweite Position umzuschalten oder dies zu bewirken, sodass Druckluft in das mindestens eine ausgewählte Teilsystem oder Teil (105, 110, 115, 120, 125) strömen kann, während gleichzeitig die Kontrollprüfung durchgeführt wird.

2. Luftzufuhr-Managementsystem (1) nach Anspruch 1, wobei der mindestens einen Satz von Luftstrom-Steuereinrichtungen (10) mindestens ein Ventil (12) umfasst, das konfiguriert ist, um das mindestens eine ausgewählte Teilsystem oder Teil (115, 120, 125) des pneumatischen Systems (100) vorübergehend fluidisch zu isolieren.

3. Luftzufuhrmanagementsystem (1) nach Anspruch 2, wobei der mindestens einen Satz von Luftstrom-Steuereinrichtungen (10) ferner mindestens einen Sensor (14) zum Überwachen des mindestens einen Ventils (12) umfasst.

4. Luftzufuhr-Managementsystem (1) nach Anspruch 3, wobei der mindestens einen Satz von Luftstrom-Steuereinrichtungen (10) ferner mindestens eine Bypass-Vorrichtung (16) zum Umgehen des mindestens einen Ventils (12) umfasst, wenn der mindestens eine Sensor (14) einen Ausfall des überwachten mindestens einen Ventils (12) erkennt.

5. Luftzufuhr-Managementsystem (1) nach Anspruch 2, wobei das mindestens ein Ventil (12) ein Elektroventil umfasst.

6. Luftzufuhr-Managementsystem (1) nach Anspruch 2, wobei das mindestens ein Ventil (12) ein Mindestdruckventil umfasst.

7. Luftzufuhr-Managementsystem (1) nach einem der vorherigen Ansprüche, wobei es eine Vielzahl von Sätzen von Luftstrom-Steuereinrichtungen (10) umfasst, wobei jeder Satz von Luftstrom-Steuereinrichtungen (10) mit einem entsprechenden Teilsystem oder Teil des pneumatischen Systems (100) assoziiert ist, und wobei die Steuerung (2) konfiguriert ist, um die Sätze von Luftstrom-Steuereinrichtungen (10) in einer vordefinierten Reihenfolge von der jeweiligen ersten Position in die jeweilige zweite Position umzuschalten oder dies zu bewirken.

8. Luftzufuhr-Managementsystem (1) nach einem der Ansprüche 1 bis 6, wobei es eine Vielzahl von Sätzen von Luftstrom-Steuereinrichtungen (10) umfasst, wobei jeder Satz von Luftstrom-Steuereinrichtungen (10) mit einem entsprechenden Teilsystem oder Teil des pneumatischen Systems (100) assoziiert ist, und wobei die Steuerung (2) konfiguriert ist, um mindestens zwei Sätze von Luftstrom-Steuereinrichtungen (10) parallel zueinander von der jeweiligen ersten Position in die jeweilige zweite Position umzuschalten oder dies zu bewirken.

9. Luftzufuhr-Managementsystem (1) nach einem der vorherigen Ansprüche, wobei die Ausrüstung ein Transportfahrzeug ist, umfassend das pneumatische System (100), und wobei eines von dem Teilsystem oder Teil ein Luftbremssystem (105) ist, und wobei die Steuerung (2) angepasst ist, um einen Bremstest des Luftbremssystems (105) durchzuführen, bevor das Transportfahrzeug in Betrieb genommen wird.

10. Pneumatisches System (100) einer Ausrüstung, **dadurch gekennzeichnet, dass** es ein Luftzufuhr-Managementsystem (1) nach einem der vorherigen Ansprüche umfasst.

11. Ausrüstung, **dadurch gekennzeichnet, dass** sie ein Luftzufuhr-Managementsystem (1) nach einem der Ansprüche 1 bis 9 oder ein pneumatisches System (100) nach Anspruch 10 umfasst.

12. Transportfahrzeug, **dadurch gekennzeichnet, dass** es ein Luftzufuhr-Managementsystem (1) nach einem der Ansprüche 1 bis 9 oder ein pneumatisches System (100) nach Anspruch 10 umfasst.

13. Transportfahrzeug nach Anspruch 12, wobei das Transportfahrzeug ein Schienenfahrzeug ist.

14. Verfahren (200) zum Managen der Luftzufuhr für eine Ausrüstung, umfassend ein pneumatisches System (100), wovon mindestens ein Teil oder ein Teilsystem vor der Inbetriebnahme der Ausrüstung einer Kontrollprüfung unterzogen werden muss, wobei das Verfahren (200) **dadurch gekennzeichnet, dass** es mindestens die folgenden Phasen umfasst:
- (210): Versehen des pneumatischen Systems (100) mit mindestens einem Satz von Luftstrom-Steuereinrichtungen (10), die konfiguriert sind, um zwischen einem ersten Zustand, in dem sie vorübergehend verhindern, dass Druckluft in mindestens ein ausgewähltes Teilsystem oder Teil (105, 110, 115, 120, 125) des pneumatischen Systems (100) strömt, und einem zweiten Zustand, in dem eine Strömung von Druckluft in das mindestens eine ausgewählte Teilsystem oder Teil (105, 110, 115, 120, 125) zugelassen ist, umzuschalten;
- (220): Zuführen von Druckluft zu einem oder mehreren restlichen Teilsystemen oder Teilen (105, 110, 115, 120, 125) des pneumatischen Systems (100), während der mindestens einen Satz von Luftstrom-Steuereinrichtungen (10) in dem ersten Zustand gehalten wird, um vorübergehend zu verhindern, dass Druckluft in das mindestens eine ausgewählte Teilsystem oder Teil (105, 110, 115, 120, 125) des pneumatischen Systems (100) strömt;
- (230): Beginnen einer Kontrollprüfung von mindestens einem der restlichen Teilsysteme oder Teile (105, 110, 115, 120, 125), die mit Druckluft gefüllt sind, wenn der Innendruck des pneumatischen Systems (100) einen vorbestimmten ersten Druckschwellenwert erreicht,
- (240): Umschalten des mindestens eines Satzes von Luftstrom-Steuereinrichtungen (10) von der ersten Position in die zweite Position oder dies bewirken, um zu ermöglichen, dass Druckluft in das mindestens eine ausgewählte Teilsystem oder Teil (105, 110, 115, 120, 125) strömt, während parallel dazu die Kontrollprüfung durchgeführt wird.

15. Verfahren (200) nach Anspruch 14, wobei die Ausrüstung ein Transportfahrzeug ist, dessen pneumatisches System (100) mindestens ein Druckluftbremssystem (110) umfasst, und wobei die Phase (230) eines Beginnens einer Kontrollprüfung ein Beginnen einer Bremsprüfung umfasst, um das Funktionieren des Druckluftbremssystems (110) zu überprüfen.

## Revendications

1. Système de gestion d'alimentation d'air (1) pour un équipement comprenant un système pneumatique (100) dont au moins une partie ou un sous-système (110) doit subir un test de vérification avant de mettre en service l'équipement, le système de gestion d'air (1) comprenant au moins :
- un dispositif de commande (2) ;
- un compresseur (4) configuré pour alimenter le système pneumatique (100) en air sous pression ; **caractérisé par**
- au moins un ensemble de moyens de commande d'écoulement d'air (10) qui sont connectés au système pneumatique (100) et sont configurés pour commuter entre un premier état où ils empêchent l'air sous pression de s'écouler dans au moins un sous-système ou une partie (105, 110, 115, 120, 125) sélectionné(e) du système pneumatique (100) tandis qu'un ou plusieurs sous-systèmes ou parties (105, 110, 115, 120, 125) restant(e)s du système pneumatique (100) sont rempli(e)s d'air sous pression, et un deuxième état où l'écoulement d'air sous pression dans ledit/ladite au moins un(e) sous-système ou partie (105, 110) sélectionné(e) est autorisé ;
dans lequel le dispositif de commande (2) est configuré pour démarrer un test de vérification d'au moins l'un(e) desdits/desdites un(e) ou plusieurs sous-systèmes ou parties (105, 110) restant(e) rempli(e) d'air sous pression lorsque la pression interne du système pneumatique (100) atteint un seuil prédéterminé, et pour commuter ou amener ledit au moins un ensemble de moyens de commande d'écoulement d'air (10) à commuter de ladite première position à ladite deuxième position en permettant à l'air sous pression de s'écouler dans l'au moins un(e) sous-système ou partie (105, 110, 115, 120, 125) sélectionné(e) tout en réalisant en parallèle ledit test de vérification.

2. Système de gestion d'alimentation d'air (1) selon la revendication 1, dans lequel ledit au moins un ensemble de moyens de commande d'écoulement d'air (10) comprend au moins une vanne (12) configurée pour isoler temporairement fluidiquement ledit/ladite au moins un(e) sous-système ou partie (115, 120, 125) sélectionné(e) du système pneumatique (100).

3. Système de gestion d'alimentation d'air (1) selon la revendication 2, dans lequel ledit au moins un ensemble de moyens de commande d'écoulement d'air (10) comprend en outre au moins un capteur (14) pour surveiller l'au moins une vanne (12).

4. Système de gestion d'alimentation d'air (1) selon la revendication 3, dans lequel ledit au moins un ensemble de moyens de commande d'écoulement d'air (10) comprend en outre au moins un dispositif de dérivation (16) pour contourner l'au moins une vanne (12) si ledit au moins un capteur (14) détecte une panne de l'au moins une vanne (12) surveillée.

5. Système de gestion d'alimentation d'air (1) selon la revendication 2, dans lequel ladite au moins une vanne (12) comprend une électrovanne.

6. Système de gestion d'alimentation d'air (1) selon la revendication 2, dans lequel ladite au moins une vanne (12) comprend une vanne de pression minimale.

7. Système de gestion d'alimentation d'air (1) selon l'une quelconque des revendications précédentes, dans lequel il comprend une pluralité d'ensembles de moyens de commande d'écoulement d'air (10), chaque ensemble de moyens de commande d'écoulement d'air (10) étant associé à un sous-système ou une partie correspondant(e) du système pneumatique (100), et dans lequel le dispositif de commande (2) est configuré pour commuter ou amener les ensembles de moyens de commande d'écoulement d'air (10) à commuter de la première position respective à la deuxième position respective selon un ordre prédéfini entre eux.

8. Système de gestion d'alimentation d'air (1) selon l'une quelconque des revendications 1 à 6, dans lequel il comprend une pluralité d'ensembles de moyens de commande d'écoulement d'air (10), chaque ensemble de moyens de commande d'écoulement d'air (10) étant associé à un sous-système ou une partie correspondant du système pneumatique (100), et dans lequel le dispositif de commande (2) est configuré pour commuter ou amener à commuter au moins deux ensembles de moyens de commande d'écoulement d'air (10) de la première position respective à la deuxième position respective parallèlement l'un à l'autre.

9. Système de gestion d'alimentation d'air (1) selon l'une quelconque des revendications précédentes, dans lequel ledit équipement est un véhicule de transport comprenant le système pneumatique (100), et dans lequel l'un du sous-système ou de la partie est un système de frein pneumatique (105), et dans lequel ledit dispositif de commande (2) est adapté pour réaliser un test de frein du système de frein pneumatique (105) avant que le véhicule de transport ne soit mis en service.

10. Système pneumatique (100) d'un équipement, **caractérisé en ce qu'**il comprend un système de gestion d'alimentation d'air (1) selon l'une quelconque des revendications précédentes.

11. Équipement **caractérisé en ce qu'**il comprend un système de gestion d'alimentation d'air (1) selon l'une quelconque des revendications 1 à 9, ou un système pneumatique (100) selon la revendication 10.

12. Véhicule de transport **caractérisé en ce qu'**il comprend un système de gestion d'alimentation d'air (1) selon l'une quelconque des revendications 1 à 9, ou un système pneumatique (100) selon la revendication 10.

13. Véhicule de transport selon la revendication 12, dans lequel le véhicule de transport est un véhicule ferroviaire.

14. Procédé (200) de gestion d'alimentation d'air pour un équipement comprenant un système pneumatique (100) dont au moins une partie ou un sous-système doit subir un test de vérification avant de mettre en service l'équipement, le procédé (200) étant **caractérisé en ce qu'**il comprend au moins les phases suivantes :
- (210) : fourniture au système pneumatique (100) d'au moins un ensemble de moyens de commande d'écoulement d'air (10) configurés pour commuter entre un premier état où ils empêchent temporairement l'air sous pression de s'écouler dans au moins un sous-système ou une partie (105, 110, 115, 120, 125) sélectionné(e) du système pneumatique (100) et un deuxième état où l'écoulement d'air sous pression dans ledit/ladite au moins un/une sous-système ou partie (105, 110, 115, 120, 125) sélectionné(e) est autorisé ;
- (220) : alimentation d'un(e) ou plusieurs sous-systèmes ou parties (105, 110, 115, 120, 125) restant(e)(s) du système pneumatique (100) en air sous pression, tout en maintenant ledit au moins un ensemble de moyens de commande d'écoulement d'air (10) dans ledit premier état pour empêcher temporairement l'air sous pression de s'écouler dans ledit/ladite au moins un(e) sous-système ou partie (105, 110, 115, 120, 125) du système pneumatique (100) ;
- (230) : démarrage d'un test de vérification d'au moins l'un(e) desdits/desdites un(e) ou plusieurs sous-systèmes ou parties (105, 110, 115, 120, 125) restant(e) rempli(e) d'air sous pression lorsque la pression interne du système pneumatique (100) atteint un premier seuil de pression prédéterminé,
- (240) : commutation ou fait d'amener ledit au moins un ensemble de moyens de commande d'écoulement d'air (10) à commuter de ladite première position à ladite deuxième position en permettant à l'air sous pression de s'écouler dans l'au moins un(e) sous-système ou partie (105, 110, 115, 120, 125) sélectionné(e) tout en réalisant en parallèle ledit test de vérification.

15. Procédé (200) selon la revendication 14, dans lequel ledit équipement est un véhicule de transport dont le système pneumatique (100) comprend au moins un système de frein pneumatique (110), et dans lequel ladite phase (230) de démarrage d'un test de vérification comprend le démarrage d'un test de freinage pour vérifier le fonctionnement dudit système de frein pneumatique (110).
